# FASCICULE DE BREVET EUROPEEN

(11) **EP 2 264 083 B1**
(45) Date de publication et mention de la délivrance du brevet: **02.09.2015**
(21) Numéro de dépôt: 10173235.2
(22) Date de dépôt: 29.06.2004
(51) Int. Cl.: C08G 69/36, C08L 77/00, B32B 27/34, H01B 3/38

(54) **Structure comprenant des polyamides semi-aromatiques souples à faible reprise en humidité**
Struktur, die halbaromatische Weichpolyamide mit schwacher Wasseraufnahme umfasst
Structure including flexible semi-aromatic polyamides with low moisture take-up

(30) Priorité: 05.08.2003 FR 0309641; 30.01.2004 FR 0400906
(43) Date de publication de la demande: 22.12.2010
(62) Demande divisionnaire de: 04291633.8
(73) Titulaire: Arkema France, 92700 Colombes (FR)
(72) Inventeur: Blondel, Philippe, 27300, BERNAY (FR); Briffaud, Thierry, 27300, CAORCHES SAINT NICOLAS (FR); Linemann, Annett, 66121 Saarbrücken (DE); Egret, Hélène, 1050, BRUXELLES (BE); Nogues, Pierre, 27300, BERNAY (FR)

(56) Documents cités:
- EP-A- 0 550 314
- FR-A1- 2 832 485
- US-A- 3 843 611

## Description

### [Domaine de l'invention]

La présente invention concerne des polyamides semi aromatiques souples à faible reprise en humidité. Ces polyamides ont aussi de bonnes propriétés d'allongement. Ces polyamides ont une résistance thermomecanique elevée. Les polyamides 6 et 6,6 ont des températures de fusion élevées mais leur transformation est difficile et de plus leur reprise en eau est trop élevée ce qui pénalise leurs propriétés mécaniques et leur résistance au vieillissement. De plus ils sont trop rigides pour être utilisés comme tuyaux il est alors nécessaire de les assouplir par des plastifiants ou des modifiants choc. On perd alors toutes les propriétés. Les polyamides 12 et 11 sont très utilisés dans l'industrie automobile à cause de leurs remarquables propriétés mécaniques, leur facilité d'emploi et leur résistance au vieillissement. Cependant au-delà de 160°C de température de service leur résistance thermomécanique n'est pas suffisante. L'invention concerne des polyamides devant remplacer les polyamides 12 et 11 mais dont la tenue thermomécanique est améliorée mais tout en conservant leur facilité de transformation et leur souplesse.

### [L'art antérieur et le problème technique]

Il existe des copolyamides téréphtaliques sur base 6 (par ex 6,6/6,T ou 6/6,T ou encore 6,I/6,T à majorité 6,T) qui ont des Tf très élevées, au-delà de 300°C. Ces produits sont très rigides et leur allongement à la rupture est inférieur à 10% ce qui empêche leur usage dans le domaine d'extrusion des tubes. Le brevet EP 550314 exemplifie des copolyamides 12/6,T. Le brevet US 3 843 611 décrit les copolyamides 12,12/12,T. Le brevet US 5 708 125 décrit les copolyamides 10,6/10,T. Aucun de ces arts antérieurs ne décrit une aptitude éventuelle au vieillissement. De plus aucun de ces art antérieurs ne décrit la nécessité de polyamides souples. Le but de la présente invention est de trouver des polyamides ayant une résistance au vieillissement alors qu'ils sont soumis à une haute température de service tout en restant souples. On a maintenant trouvé de telles compositions.

### [Brève description de l'invention]

La présente invention concerne des structures comprenant une couche constituée d'une composition (C) et d'autres couches constituées d'autres matériaux, la structure comprenant :
- Une couche externe constituée de la composition (C),
- Eventuellement une couche de liant,
- Une couche intérieure, éventuellement conductrice, constituée de polyamide aliphatique ou de polyoléfine ou d'un mélange compatibilisé de polyamide et de polyoléfine,
- Eventuellement, une couche conductrice de polyamide aliphatique ou de mélange de polyamide aliphatique et de polyoléfine ,
la composition (C) comprenant, en poids, le total étant 100 :
- 60 à 99,5% (de préférence 70 à 93%) d'au moins un copolyamide de formule X/Y,Ar dans laquelle :
   - Y désigne les restes d'une diamine aliphatique ayant de 8 à 20 atomes de carbone,
   - Ar désigne les restes d'un diacide carboxylique aromatique,
   - X désigne soit les restes de l'acide aminoundecanoïque NH₂-(CH₂)₁₀-COOH, du lactame 12 ou de l'aminoacide correspondant soit le motif Y,x reste de la condensation de la diamine avec un diacide aliphatique (x) ayant entre 8 et 20 atomes de carbone soit encore le motif Y,I reste de la condensation de la diamine avec l'acide isophtalique,
      - 0,5 à 40% (de préférence 7 à 30%) d'au moins un produit choisi parmi les plastifiants, les nanocharges, les polyoléfines, les polyoléfines réticulées et des additifs,
      - Ladite composition comprenant éventuellement un polyamide aliphatique.

Avantageusement la viscosité inhérente du copolyamide est comprise entre 0,5 et 2 et de préférence entre 0,8 et 1,8.

L'avantage de ces compositions est la faible reprise en eau qui ne dépasse pas 3,5% et avantageusement 3% en poids.

De préférence X/ Y,Ar désigne :
- le 11/10,T qui résulte de la condensation de l'acide aminoundecanoïque, de la 1,10-décanediamine et de l'acide téréphtalique,
- le 12/12,T qui résulte de la condensation du lactame 12, de la 1,12-dodécanediamine et de l'acide téréphtalique,
- le 10,10/10,T qui résulte de la condensation de l'acide sébacique, de la 1,10-décanediamine et de l'acide téréphtalique,
- le 10,I/10,T qui résulte de la condensation de l'acide isophtalique, de la 1,10-décanediamine et de l'acide téréphtalique.

Cette structure est utile pour faire des dispositifs de stockage ou de transfert de fluides en particulier dans les automobiles. L'invention concerne aussi ces dispositifs. Ces dispositifs peuvent être des réservoirs, des tuyaux, des récipients. Ces structures peuvent comprendre d'autres couches constituées d'autres matériaux.

Les compositions de l'invention peuvent remplacer les caoutchoucs ou les métaux.

Les compositions de l'invention sont utiles aussi comme matériaux pour les câbles électriques et peuvent remplacer des polymères fluorés.

Les compositions de l'invention sont utiles comme matériaux pour des formulations chargées : ex charges magnétiques. Les compositions de l'invention servent alors de liant de ce type de charges.

On a aussi découvert que si on ajoutait un polyamide aliphatique dans les compositions de l'invention alors on ameliorait fortement la tenue thermo-oxydative. La tenue thermo-oxydative est definie comme la 1/2 vie avec l'allongement rupture qui atteint 50% de l'allongement initial c'est à dire le temps au bout duquel l'allongement à la rupture diminue de moitié. A titre d'exemple de polyamide aliphatique on peut citer le PA11, le PA12, le PA10,10(diamine C10 et diacide C10), le PA 12.12(diamine C12 et diacide C12), les copolyamides resultant de la condensation d'au moins deux lactames (ou des aminoacides correspondants), les copolyamides resultant de la condensation d'au moins un lactame, au moins une diamine et au moins un diacide, ainsi que les PA aliphatiques resultant de la condensation de l'hexamethylene diamine avec un diacide C10 à C36 (par exemple le PA6,10, le PA 6,12, le PA 6,14 et le PA 6,36). Il est avantageux que ces polyamides soient miscibles avec le PA X/Y,Ar cité plus haut. Il est aussi avantageux que ces polyamides aient une reprise en eau en saturation inférieure à 3,5%.

Avantageusement la quantité de ce polyamide aliphatique qu'on rajoute est comprise entre 5 et 40% pour respectivement 95 à 60% de PA X/Y,Ar.

Avantageusement ce polyamide aliphatique qu'on ajoute contient un catalyseur organique ou minéral qu'on a ajouté soit au cours de sa préparation soit ultérieurement. De préférence c'est de l'acide phosphorique ou hypophosphorique. La quantité de catalyseur peut être jusqu'à 3000 ppm par rapport à la quantité du polyamide aliphatique et avantageusement entre 50 et 1000 ppm.

Par exemple les compositions de l'invention dans lesquelles le PA est le 11/10,T et qui contiennent 0,6% en poids d'un stabilisant thermique de type phénol, phosphite, iodure de potassium (par ex l'iodine 101 ou 201 de Ciba speciality chemicals) a une demi-vie de 24 à 48h. Si dans cette composition on ajoute 30% de PA11 (pour 70% de PA X/Y,Ar) contenant 600ppm H3PO4 la demi vie passe à plus de 1250 h.

### [Description détaillée de l'invention]

**S'agissant du diacide aromatique** on peut citer l'acide téréphtalique, l'acide isophtalique, bibenzoïque, naphtalène dicarboxylique, l'acide 4,4'-diphénylenedicarboxylique, l'acide bis(p-carboxyphényl) méthane, l'éthylène bis p-benzoïque acide, l'acide 1-4 tétraméthylène bis(p-oxybenzoïque), l'acide éthylène bis (para oxybenzoïque), l'acide 1,3-triméthylène bis (p-oxybenzoique). De préférence c'est l'acide téréphtalique, il est désigné par "T".

**S'agissant de "Y"** la diamine peut être une alpha-oméga diamine à chaîne droite. De préférence elle a de 9 à 14 atomes de carbone. Selon une forme préférée c'est la 1,10-décanediamine. Elle peut être branchée ou être un mélange d'une diamine linéaire (chaîne droite) et d'une diamine branchée.

**S'agissant de "X"** et plus particulièrement de "x" dans "Y, x" c'est avantageusement un alpha-oméga diacide aliphatique à chaîne droite. De préférence il a entre 9 et 14 atomes de carbone.

**S'agissant des proportions de X, Y et Ar,** Y et Ar sont en proportions stoechiométriques ou très proches.

Il y a avantageusement entre 0,5 et 0,7 mole de X pour 1 mole de Y (ou une mole de Ar).

0,5 moles de X veut dire aussi 0,5 moles de Y,x c'est à dire 0,5 moles de Y et 0,5 moles de x dans le groupement Y,x. De même 0,5 moles de X veut dire aussi 0,5 moles de Y,I c'est à dire 0,5 moles de Y et 0,5 moles de I dans le groupement Y,I.

Si Y est à longue chaîne, par exemple a au moins de l'ordre de 15 à 18 atomes de carbone alors les proportions de X peuvent être très faibles voire nulles. Le copolyamide se réduit à Y,Ar. L'invention concerne aussi les compositions précédentes dans lesquelles X/Y,Ar est devenu Y,Ar et Y désigne les restes d'une diamine aliphatique ayant de 10 à 20 (de préférence de 15 à 20 et mieux de 18 à 20) atomes de carbone.

Si X/Y,Ar désigne le 10,10/10,T alors les proportions de X peuvent être plus élevées et être comprises entre 0,5 mole pour 1 mole de Y et 1 mole pour 0,05 mole de Y.

Par exception à ce qui a été écrit plus haut, si X/Y,Ar désigne le 10,I/10,T alors alors la proportion de 10,1 est plus élevée que celle de 10,T.

**S'agissant du plastifiant** il est choisi parmi les dérivés de benzène sulfonamide, tels que le n-butyl benzène sulfonamide (BBSA), l'éthyl toluène sulfonamide ou le N-cyclohexyl toluène sulfonamide; les esters d'acides hydroxy-benzoïques, tels que le parahydroxybenzoate d'éthyl-2 hexyle et le parahydroxybenzoate de décyl-2 hexyle ; les esters ou éthers du tétrahydrofurfuryl alcool, comme l'oligoéthylèneoxytétrahydrofurfurylalcool ; les esters de l'acide citrique ou de l'acide hydroxy-malonique, tels que l'oligoéthylèneoxy malonate. On peut citer aussi le decyl héxyl parahydroxybenzoate et l'éthyl héxyl parahydroxybenzoate. Un plastifiant particulièrement préféré est le n-butyl benzène sulfonamide (BBSA).

**S'agissant des nanocharges** on désigne ainsi des particules de toute forme l'une au moins de leurs dimensions étant de l'ordre du nanomètre. Avantageusement ce sont des charges exfoliables lamellaires. En particulier, les charges exfoliables lamellaires sont des silicates et notamment des argiles traitées organophiles ; ces argiles qui se présentent sous forme de feuillets sont rendues organophiles par intercalation entre ceux-ci de molécules organiques ou polymères, et sont obtenues en particulier selon un procédé tel que décrit dans le brevet US 5,578,672 .

De préférence, les argiles utilisées sont du type smectite, soit d'origine naturelle comme notamment les montmorillonites, les bentonites, les saponites, les hectorites, les fluorohectorites, les beidellites, les stibensites, les nontronites, les stipulgites, les attapulgites, les illites, les vermiculites, les halloysites, les stevensites, les zéolithes, les terres à foulon et le mica, soit d'origine synthétique comme les permutites .

A titre d'exemple on peut citer les argiles organophiles décrites dans le brevet US 6117932. De préférence l'argile est modifiée avec une substance organique par une liaison ionique avec un ion onium ayant 6 atomes de carbone ou plus. Si le nombre d'atomes de carbone est inférieur à 6 l'ion onium organique est trop hydrophile et donc la compatibilité avec le polymère (le mélange de (A) et (B)) peut décroître. A titre d'exemple d'ion onium organique on peut citer les ions héxylammonium, les ions octylammonium, les ions 2-éthylhéxylammonium, les ions dodécylammonium, les ions laurylammonium, les ions octadecylammonium (stéarylammonium), les ions dioctyldiméthylammonium, les ions trioctylammonium, les ions distéaryldiméthylammonium, les ions stéaryltriméthylammonium et les ions laurate d'ammonium. Il est recommandé d'utiliser une argile ayant la plus grande surface possible de contact avec le polymère. Plus la surface de contact est grande plus la séparation des lamelles d'argile sera importante. La capacité d'échange cationique de l'argile est de préférence comprise entre 50 et 200 milliéquivalents pour 100g. Si la capacité est inférieure à 50 l'échange des ions oniums est insuffisant et la séparation des lamelles d'argile peut être difficile. Au contraire si la capacité est supérieure à 200 la force de liaison entre les lamelles d'argile est si forte que la séparation des lamelles peut être difficile. A titre d'exemple d'argile on peut citer la smectite, la montmorillonite, la saponite, l'hectorite, la beidellite, la stibensite, la nontronite, la vermiculite, l'halloysite et le mica. Ces argiles peuvent être d'origine naturelle ou synthétique. La proportion d'ion onium organique est avantageusement entre 0,3 et 3 équivalent de la capacité d'échange ionique de l'argile. Si la proportion est inférieure à 0,3 la séparation des lamelles d'argile peut être difficile. Si la proportion est supérieure à 3 il peut y avoir dégradation du polymère. La proportion d'ion onium organique est de préférence entre 0,5 et 2 équivalent de la capacité d'échange ionique de l'argile. Les nanocharges peuvent être ajoutées aux monomères et être présentes pendant la polymérisation du copolyamide ou être ajoutées après la polymérisation.

**S'agissant des polyoléfines réticulées** cette phase peut provenir (i) de la réaction de deux polyoléfines ayant des groupes réactifs entre eux, (ii) de polyoléfines maleisées avec une molécule diamino monomérique, oligomérique ou polymérique, (iii) d'une (ou plusieurs) polyoléfine insaturée porteur d'insaturation et réticulable par exemple par voie peroxyde. S'agissant de la réaction de deux polyoléfines cette phase réticulée provient par exemple de la réaction :
- d'un produit (A) comprenant un époxyde insaturé,
- d'un produit (B) comprenant un anhydride d'acide carboxylique insaturé,
- éventuellement d'un produit (C) comprenant un acide carboxylique insaturé ou d'un acide alphaomegaaminocarboxylique.

S'agissant des polyoléfines réticulées à titre d'exemple de produit (A) on peut citer ceux contenant de l'éthylène et un époxyde insaturé.

Selon une première forme de l'invention (A) est soit un copolymère de l'éthylène et d'un époxyde insaturé soit une polyoléfine greffée par un époxyde insaturé.

S'agissant de la polyoléfine greffée par un époxyde insaturé on entend par polyoléfine les polymères comprenant des motifs oléfines tels que par exemple des motifs éthylène, propylène, butène-1, ou tout autre alpha oléfine. A titre d'exemple, on peut citer
- les polyéthylènes tels que les LDPE, HDPE, LLDPE ou VLDPE, le polypropylène, les copolymères éthylène / propylène, les EPR (éthylène / propylène Rubber) ou encore les PE métallocènes (copolymères obtenus par catalyse monosite),
- les copolymères blocs styrène / éthylène-butène / styrène (SEBS), les copolymères blocs styrène / butadiène / styrène (SBS), les copolymères blocs styrène / isoprène / styrène (SIS), les copolymères blocs styrène / éthylène-propylène / styrène, les éthylène / propylène / diène (EPDM) ;
- les copolymères de l'éthylène avec au moins un produit choisi parmi les sels ou les esters d'acides carboxyliques insaturés, ou les esters vinyliques d'acides carboxyliques saturés.

Avantageusement, la polyoléfine est choisie parmi le LLDPE, le VLDPE, le polypropylène, les copolymères éthylène / acétate de vinyle ou les copolymères éthylène / (méth)acrylate d'alkyle. La densité peut être avantageusement comprise entre 0,86 et 0,965, l'indice de fluidité (MFI) peut être compris entre 0,3 et 40 (en g/10 min à 190°C sous 2,16 kg) .

S'agissant des copolymères de l'éthylène et d'un époxyde insaturé on peut citer par exemple les copolymères de l'éthylène d'un (meth)acrylate d'alkyle et d'un époxyde insaturé ou les copolymères de l'éthylène, d'un ester vinylique d'acide carboxylique saturé et d'un époxyde insaturé. La quantité époxyde peut être jusqu'à 15 % en poids du copolymère et la quantité d'éthylène d'au moins 50 % en poids.

Avantageusement (A) est un copolymère de l'éthylène d'un (meth)acrylate d'alkyle et d'un époxyde insaturé.

De préférence le (meth)acrylate d'alkyle est tel que l'alkyle possède 2 à 10 atomes de carbone.

Le MFI (indice de fluidité à l'état fondu) de (A) peut être par exemple entre 0,1 et 50 (g/10 min à 190°C sous 2,16 kg).

Des exemples d'acrylate ou methacrylate d'alkyle utilisables sont notamment le methacrylate de méthyle, l'acrylate d'éthyle, l'acrylate de n-butyle, l'acrylate d'isobutyle, l'acrylate de 2-éthylhexyle. Des exemples d'époxydes insaturés utilisables sont notamment :
- les esters et éthers de glycidyle aliphatiques tels que l'allylglycidyléther, le vinylglycidyléther, le maléate et l'itaconate de glycidyle, l'acrylate et le methacrylate de glycidyle, et
- les esters et éthers de glycidyle alicycliques tels que le 2-cyclohexène-I-glycidyléther, le cyclohexène-4,5-diglycidylcarboxylate, le cyclohexène-4-glycidyl carboxylate, 5-norbornène-2-méthyl-2-glycidyl carboxylate et endocis-bicyclo(2,2,1)-5-heptène-2,3-diglycidyl dicarboxylate.

Selon une autre forme de l'invention le produit (A) est un produit ayant deux fonctions époxyde tel que par exemple le diglycidyl ether du bisphenol A (DGEBA).

A titre d'exemple de produit (B) on peut citer ceux contenant de l'éthylène et un anhydride d'acide carboxylique insaturé.

(B) est soit un copolymère de l'éthylène et d'un anhydride d'acide carboxylique insaturé soit une polyoléfine greffée par un anhydride d'acide carboxylique insaturé.

La polyoléfine peut être choisie parmi les polyoléfines citées plus haut et devant être greffées par un époxyde insaturé.

Des exemples d'anhydrides d'acide dicarboxylique insaturé utilisables comme constituants de (B) sont notamment l'anhydre maléique, l'anhydride itaconique, l'anhydride citraconique, l'anhydride tétrahydrophtalique.

A titre d'exemples on peut citer les copolymères de l'éthylène d'un (meth)acrylate d'alkyle, d'un anhydride d'acide carboxylique insaturé et les copolymères de l'éthylène, d'un ester vinylique d'acide carboxylique saturé et d'un anhydride d'acide carboxylique insaturé.

La quantité d'anhydre carboxylique insaturé peut être jusqu'à 15 % en poids du copolymère et la quantité d'éthylène d'au moins 50 % en poids.

Avantageusement (B) est un copolymère de l'éthylène d'un (meth)acrylate d'alkyle et d'un anhydride carboxylique insaturé. De préférence le (meth)acrylate d'alkyle est tel que l'alkyle possède 2 à 10 atomes de carbone.

Le (méth)acrylate d'alkyle peut être choisi parmi ceux cités plus haut.

Le MFI de (B) peut être par exemple entre 0,1 et 50 (g/10 min à 190°C sous 2,16 kg).

Selon une autre forme de l'invention (B) peut être choisi parmi les acides polycarboxyliques aliphatiques, alicycliques ou aromatiques, leurs anhydrides partiels ou totaux.

A titre d'exemples d'acides aliphatiques on peut citer l'acide succinique, l'acide glutarique, l'acide pimélique, l'acide azélaique, l'acide sébacique, l'acide adipique, l'acide dodecanedicarboxylique, l'acide octadecanedicarboxylique, l'acide dodecenesuccinique et l'acide butanetetracarboxylique.

A titre d'exemples d'acides alicycliques on peut citer l'acide cyclopentanedicarboxylique, l'acide cyclopentanetricarboxylique, l'acide cyclopentane-tetracarboxylique, l'acide cyclohexane dicarboxylique, l'acide hexane tricarboxylique, l'acide methylcyclopentane dicarboxylique, l'acide tetrahydrophtalique, l'acide endométhylènetetrahydrophtalique et l'acide méthylèndométhylène-tetrahydrophtalique.

A titre d'exemples d'acides aromatiques on peut citer l'acide phtalique, l'acide isophtalique, l'acide téréphtalique, l'acide trimellilique, l'acide trimesique, l'acide pyromellitique.

A titre d'exemples d'anhydrides on peut citer les anhydrides partiels ou totaux des acides précédents.

On utilise avantageusement l'acide adipique.

On ne sortirait pas du cadre de l'invention si une partie du copolymère (B) est remplacée par un copolymère éthylène-acide acrylique ou un copolymère éthylène - anhydride maléique l'anhydride maléique ayant été en tout ou partie hydrolysé. Ces copolymères peuvent aussi comprendre un (meth)acrylate d'alkyle. cette partie peut représenter jusqu'à 30% de (B).

Quant au produit (C) comprenant un acide carboxylique insaturé on peut citer à titre d'exemple les produits (B) hydrolysés en tout ou partie. (C) est par exemple un copolymère de l'éthylène et d'un acide carboxylique insaturé et avantageusement un copolymère de l'éthylène et de l'acide (méth)acrylique.

On peut encore citer les copolymères de l'éthylène, d'un (méth)acrylate d'alkyle et de l'acide acrylique.

Ces copolymères ont un MFI entre 0,1 et 50 (g/10 min à 190°C sous 2,16 kg).

La quantité d'acide peut être jusqu'à 10 % en poids et de préférence 0,5 à 5 %. La quantité de (méth)acrylate est de 5 à 40 % en poids.

(C) peut aussi être choisi parmi les acides alphaomegaaminocarboxyliques tels que par exemple NH₂-(CH₂)₅COOH, NH₂-(CH₂)₁₀COOH et NH₂(CH₂)₁₁-COOH et de préférence l'acide aminoundecanoïque.

La proportion de (A) et (B) nécessaire pour former la phase réticulée est déterminée selon les règles habituelles de l'art par le nombre de fonctions réactives présentes dans (A) et dans (B).

Par exemple dans les phases réticulées contenant (C) choisi parmi les acides alphaomegaaminocarboxyliques si (A) est un copolymère de l'éthylène d'un (meth)acrylate d'alkyle et d'un époxyde insaturé et (B) un copolymère de l'éthylène, d'un (meth)acrylate d'alkyle et d'un anhydride d'acide carboxylique insaturé les proportions sont telles que le rapport entre les fonctions anhydride et les fonctions époxy soit voisin de 1.

La quantité d'acide alphaomegaaminocarboxylique est alors de 0,1 à 3 % et de préférence 0,5 à 1,5 % de (A) et (B).

S'agissant de (C) comprenant un acide carboxylique insaturé c'est-à-dire (C) étant choisi par exemple parmi les copolymères éthylène / (méth)acrylate d'alkyle / acide acrylique, la quantité de (C) et (B) peut être choisie de telle sorte que le nombre de fonctions acide et de fonctions anhydride soit au moins égal au nombre de fonctions époxyde et avantageusement on utilise des produits (B) et (C) tels que (C) représente 20 à 80 % en poids de (B) et de préférence 20 à 50 %.

On ne sortirait pas du cadre de l'invention si on ajoutait un catalyseur.

Ces catalyseurs sont généralement utilisés pour les réactions entre les époxy et les anhydrides.

Parmi les composés capables d'accélérer la réaction entre la fonction époxy présente dans (A) et la fonction anhydride ou acide présente dans (B) on peut citer notamment :
- des amines tertiaires telles que la diméthyllaurylamine, la diméthylstéarylamine, la N-butylmorpholine, la N,N-diméthylcyclohexylamine, la benzyldiméthylamine, la pyridine, la diméthylamino-4-pyridine, le méthyl-1-imidazole, la tétraméthyléthylhydrazine, la N,N-diméthylpipérazine, la N,N,N',N'-tétraméthyl-1,6-hexanediamine, un mélange d'amines tertiaires ayant de 16 à 18 carbones et connues sous l'appellation de diméthylsuifamine
- le 1,4-diazabicyclo[2,2,2]octane (DABCO)
- des phosphines tertiaires telles que la triphénylphosphine
- des alkyldithiocarbamates de zinc.

La quantité de ces catalyseurs est avantageusement de 0,1 à 3 % et de préférence 0,5 à 1 % de (A) + (B) + (C).

**S'agissant des polyoléfines non réticulées** on peut citer les polyoléfines décrites dans le paragraphe précédent et destinées à être greffées par des groupes réactifs. On peut encore citer les produits (A) ou (B) ou (C) du paragraphe précédent mais utilisés seuls pour ne pas reticuler. A titre d'exemple on peut citer les élastomères EPR, EPDM ces élastomères pouvant être greffés pour faciliter leur compatibilisation avec le copolyamide. On peut encore citer les élastomères acryliques par exemple ceux du type NBR, HNBR, X-NBR.

**S'agissant de la préparation des compositions (C)** On peut utiliser tous les procédés conventionnels de synthèse des polyamides et copolyamides.

Les compositions selon l'invention peuvent renfermer en outre au moins un additif choisi parmi :
- les colorants ;
- les pigments ;
- les azurants ;
- les anti-oxydants ;
- les ignifugeants;
- les stabilisants UV.
- les agents nucléants.

Dans un mode de réalisation, la présente invention concerne aussi des structures comprenant (décrites de la couche la plus extérieure de l'objet à la couche intérieure):
- Une couche externe constituée d'une composition (C),
- Eventuellement une couche de polyamide aliphatique ou de mélange de polyamide aliphatique et de polyoléfine tel que décrit plus loin,
- Eventuellement une couche de liant,
- une couche centrale constituée d'un matériau barrière aux essences choisi parmi EVOH, polymères fluorés, PPS, PBN, Polycétone aliphatique, PA-MXD6, LCP, polymères nanocomposites et un alliage ayant pour matrice un desdits matériaux,
- Eventuellement une couche de liant,
- une couche intérieure, éventuellement conductrice, constituée de polyamide aliphatique ou de polyoléfine ou d'un mélange compatibilisé des deux tel que décrit plus loin,
- Eventuellement, une couche conductrice de polyamide aliphatique ou de mélange de polyamide aliphatique et de polyoléfine tel que décrit plus loin. (cette couche devient la couche intérieure)

On entend par liant tout matériau polymère susceptible de conférer à la structure le niveau d'adhésion entre couches requis pour l'application. Ces liants sont connus en eux mêmes. On peut citer à titre d'exemple des polyoléfines fonctionnalisées et de préférence greffées par l'anhydride maléique ou des copolyamides ou des mélanges de copolyamides.

**On décrit maintenant plus en détail la composition de la couche constituée de polyamide aliphatique ou de polyoléfine ou d'un mélange compatibilisé des deux.**

**On entend par polyamide aliphatique** les produits de condensation :
- d'un ou plusieurs aminoacides, tels les acides aminocaproïques, amino-7-heptanoïque, amino-11-undécanoïque et amino-12-dodécanoïque ou d'un ou plusieurs lactames tels que caprolactame, oenantholactame et lauryllactame ;
- d'un ou plusieurs sels ou mélanges de diamines telles l'hexaméthylènediamine, la dodécaméthylènediamine, avec des diacides tels que les acides adipique, azélaïque, subérique, sébacique et dodécanedicarboxylique.

On peut aussi utiliser avantageusement des copolyamides. On peut citer les copolyamides résultant de la condensation d'au moins deux acides alpha oméga aminocarboxyliques ou de deux lactames ou d'un lactame et d'un acide alpha oméga aminocarboxylique. On peut encore citer les copolyamides résultant de la condensation d'au moins un acide alpha oméga aminocarboxylique (ou un lactame), au moins une diamine et au moins un acide dicarboxylique.

On peut utiliser le PA 6 et le PA 6-6.

Les polyamides aliphatiques peuvent être aussi choisis parmi le PA 11, le PA 12, les polyamides aliphatiques résultant de la condensation d'une diamine aliphatique ayant de 6 à 12 atomes de carbone et d'un diacide aliphatique ayant de 9 à 12 atomes de carbone et les copolyamides 11/12 ayant soit plus de 90% de motifs 11 soit plus de 90% de motifs 12.

A titre d'exemple de polyamides aliphatiques résultant de la condensation d'une diamine aliphatique ayant de 6 à 12 atomes de carbone et d'un diacide aliphatique ayant de 9 à 12 atomes de carbone on peut citer :
le PA 6-12 résultant de la condensation de l'hexaméthylène diamine et de l'acide 1,12-dodecanedioïque,
le PA 9-12 résultant de la condensation de la diamine en C9 et de l'acide 1,12-dodecanedioïque,
le PA 10-10 résultant de la condensation de la diamine en C10 et de l'acide 1,10-decanedioïque,
le PA 10-12 résultant de la condensation de la diamine en C9 et de l'acide 1,12-dodecanedioïque.

Quant aux copolyamides 11/12 ayant soit plus de 90% de motifs 11 soit plus de 90% de motifs 12, ils résultent de la condensation de l'acide amino 1-undecanoïque avec le lauryllactame (ou l'alpha omega amino acide en C12).

**Les polyoléfines ont déjà été décrites plus haut. On peut utiliser des polyoléfines fonctionnalisées ou non fonctionnalisées**.

**S'agissant des mélanges compatibilisés de polyamide aliphatique et de polyoléfine ils sont avantageusement à matrice polyamide.**

**Selon une première forme préférée du mélange de polyamide et de polyoléfine** la polyoléfine comprend (i) un polyéthylène haute densité (HDPE) et (ii) un mélange d'un polyéthylène et d'un polymère choisi parmi les élastomères, les polyéthylènes de très basse densité et les copolymères de l'éthylène, le mélange étant cogreffé par un acide carboxylique insaturé ou un anhydride d'acide carboxylique insaturé.

Selon une variante de cette première forme de l'invention la polyoléfine comprend (i) un polyéthylène haute densité (HDPE), (ii) un polymère choisi parmi les élastomères, les polyéthylènes de très basse densité et les copolymères de l'éthylène ce polymère (ii) étant greffé par un acide carboxylique insaturé ou un anhydride d'acide carboxylique insaturé et éventuellement (iii) un polymère choisi parmi les élastomères, les polyéthylènes de très basse densité et les copolymères de l'éthylène.

**Selon une deuxième forme préférée du mélange de polyamide et de polyoléfine** la polyoléfine comprend (i) du polypropylène et (ii) une polyoléfine qui résulte de la réaction d'un polyamide avec un copolymère comprenant du propylène et un monomère insaturé X, greffé ou copolymérisé.

**Selon une troisième forme préférée du mélange de polyamide et de polyoléfine** la polyoléfine comprend (i) un polyéthylène de type EVA, LLDPE , VLDPE ou metallocene et (ii) un copolymère éthylène -(meth)acrylate d'alkyle -anhydride maléique.

**Selon une quatrième forme préférée du mélange de polyamide et de polyoléfine** la polyoléfine comprend deux polymères fonctionnalisés comprenant au moins 50 % en moles de motifs éthylène et pouvant réagir pour former une phase réticulée.

**S'agissant de la première forme** les proportions sont avantageusement les suivantes (en poids) :
50 à 75 % de polyamide,
5 à 15 % du mélange cogreffé
le complément en polyéthylène haute densité.

S'agissant de la variante de la première forme les proportions sont avantageusement les suivantes (en poids) :
50 à 75 % de polyamide,
5 à 25% (avantageusement 15 à 25%) de (ii) greffé,
0 à 10 % de (iii)
le complément en polyéthylène haute densité.

**S'agissant de la deuxième forme** les proportions sont avantageusement les suivantes (en poids),le total faisant 100% :
50 à 75 % de polyamide,
20 à 30 % de polypropylène
3 à 10 % d'une polyoléfine qui résulte de la réaction d'un polyamide avec un copolymère comprenant du propylène et un monomère insaturé X, greffé ou copolymérisé.

**S'agissant de la troisième forme** les proportions sont avantageusement les suivantes (en poids) :
50 à 75 % de polyamide,
5 à 15 % d'un copolymère éthylène -(meth)acrylate d'alkyle -anhydride maléique.
le complément est un polyéthylène de type EVA, LLDPE , VLDPE ou metallocene.

**S'agissant de la quatrième forme** les proportions sont avantageusement les suivantes (en poids) :
40 à 95 % de polyamide,
60 à 5 % d'un mélange d'un copolymère éthylène -(meth)acrylate d'alkyle - anhydride maléique et d'un copolymère éthylène -(meth)acrylate d'alkyle - methacrylate de glycidyle.

### [Exemples]

### Exemple 1 : réalisation d'un 11/10,T : 0.7/1.1 en mole

Dans un réacteur de 100 litres, nous chargeons 12.2kg d'acide téréphtalique, 12.65 kg de décanediamine, 10,15 kg d'amino 11 undécanoique, 10 litres d'eau, 175 g d'acide stéarique comme limitateur de chaine et 1.4 g de Silikonol 1000 comme anti mousse.
On chauffe à 150°C et on laisse 2 heures de maintien sous 5 bars. Ensuite, nous chauffons jusqu'à 270°C en détendant suffisamment pour atteindre 270°C 20 bars.
On détend jusqu'à pression atmosphérique en 2 heures et on réalise la poly sous balayage d'azote durant 45 mn.
La viscosité inhérente dans le métacrésol est de 1.27 dl/g. Le MFI sous 275°C et 2.16 Kg est de 3.0 g/10 minutes.
La DSC (norme ISO 11357 à 20°c / mn) donne deux pics de fusion à 243°C et 259°C à la deuxième chauffe.
En DMA, à sec, la tangente delta est d'environ 100 °C

### Conditions opératoires :

- *Appareil : RSA2 Tension*
- *Température : de - 100 °C à 300 °C*
- *Montée en température : Rampe de 5°C par minute*
- *Géométrie : Tension*
- *Fréquence :* 10 rad/s
- *Conditionnement : 1 nuit à 80°Clvide*

| **composition** | | **mélange effectué sur Werner® 30** |
|---|---|---|
| PA 11/10,T | | 99,4 |
| lodine P201 Iodure de potassium et Iodure de cuivre | | 0,6 |

| | Type Eprouvette | |
|---|---|---|
| Module traction | ISO 527 | 2020 MPa |
| Allongement rupture | ISO 527 | 150% |
| Contrainte au Seuil | ISO 527 | 60 MPa |
| Module Flexion | 80*10*4 | 1790 MPa |
| Choc charpy AE | | |
| Résilience +23°C | 80*10*4 | 10.4 ± 0.6kJ/m² |
| Résilience - 40°C | 80*10*4 | 8.2 ± 0.6 kJ/m² |

La reprise en eau à saturation dans l'eau à 100°C durant 8 jours est de 2.4% Le produit tient au chlorure de zinc

### Exemple 2 : réalisation d'un 10,10/10,T : 0.7/1.1 en mole

Dans un réacteur de 100 litres, nous chargeons 10.24 kg d'acide téréphtalique, 18.05 kg de décanediamine, 8.71 kg d'acide sébacique, 10 litres d'eau, 185g d'acide stéarique comme limitateur de chaîne et 1.5 g de Silikonol 1000 comme anti mousse. On chauffe à 150°C et on laisse 2 heures de maintien sous 4.5 bars. Ensuite, nous chauffons jusqu'à 280°C en détendant suffisamment pour atteindre 280°C 20 bars. On détend jusqu'à pression atmosphérique en 2 heures et on réalise la poly sous balayage d'azote en 60 minutes.
La viscosité inhérente dans le métacrésol est entre 1.25 dl/g. Le MFI sous 275°C et 2.16 Kg est de 5 g/10 minutes..
La DSC donne deux pics de fusion à 240 et 255°C.

La Tangente delta en DMA à sec sur barreaux 80*10*4 est de 85°C.

### Exemple 3 : Amélioration de la tenue thermique : elle est mesurée par la ½ vie par perte en allongement à 50% relatif

| Stabilisation à 0.6% lodine 201 par compound WERNER 30 | Allongement à la rupture initial % IFC | Allongement à la rupture après 48 heures à 140°C | % relatif | Allongement à la rupture après 2016heures à 140°C | % relatif |
|---|---|---|---|---|---|
| 11/10,T | 175 | 25 | 14 | nm* | nm |
| 11/10,T + 13% BBSA (plastifiant) | 240 | 25 | 10 | nm | nm |
| 11/10,T + 13% cocktail LT** | 140 | 25 | 18 | nm | nm |
| 11/10,T + 13% BBSA + 13% cocktail LT** | 180 | 60 | 33 | nm | nm |
| 11/10,T + 30% PA11 | 147 | 95 | 65 | 129 | 88 |

| | | | | | |
|---|---|---|---|---|---|
| nm*= non mesuré car % relatif inférieur à 50% cocktail LT** : lotader 4700 (50%) + lotader AX8900 (25%) + lucalène 3110 (25%) lotader AX8900 c'est un copolymère éthylène méthacrylate de glycidyle à 8% de GMA et de MFI 5 (190°C-2,16 kg) lotader 4700 c'est un copolymère éthylène-acrylate d'éthyle-MAH à 30% d'acrylate et 2% de MAH. Lucalène 3110 = Copolymère éthylène / acrylate de butyle / acide acrylique de composition en poids 88/8/4 (BASF). | | | | | |

### Exemple 4 : Amélioration de la tenue thermique : test sur tubes après 72 heures à 150°C et un choc à -40°C

| | | | | | | |
|---|---|---|---|---|---|---|
| PA 11/10,T | | 86.4 | 86.4 | 73,4 | 68.5 | 68.5 |
| BBSA | | 13 | | 13 | 4 | 5 |
| lotader 4700 | | | 6,5 | 6,5 | 8 | 5 |
| lotader ax8900 | | | 3.25 | 3.25 | 4 | 2.5 |
| lucalène 3110 | | | 3,25 | 3,25 | 4 | 2.5 |
| anti 6 | | 0,6 | 0,6 | 0,6 | 0.6 | 0.6 |
| PA11 | | | | | 10 | 15 |
| MM noir euthylen 6005-c4 | | | | | 0.9 | 0.9 |

| | Type Eprouvette | | | | | |
|---|---|---|---|---|---|---|
| **Module Flexion MPa** | 80*10*4 | 1020 | 1430 | 580 | 1250 MPa | 1270 MPa |
| **Choc charpy AE** | | | | | | |
| **Résilience** +23°C **kj**/**m²** | 80*10*4 | 11.9±1.2 | 23.4±2.1 | ***107 ±1*** | **59.9** *+*/*- 4* | ***20.1+*/*1.5*** |
| **Résilience - 40°C kj/m²** | 80*10*4 | 3.3 **± 0.3** | **12.0 ± 1.7** | 5.3 **± 0.2** | 9.5+/-1.3 | 8.3+/-0.3 |
| **Choc à -60°C sur tubes après 72h00 à 150°C** | **Tube 6*8** | **CASSE** | **CASSE** | **CASSE** | **NON CASSE** | **NON CASSE** |
| **Choc à - 50°C sur tubes après 192h00 à 150°C** | **Tube 6*8** | **CASSE** | **CASSE** | **CASSE** | **NON CASSE** | **NON CASSE** |
| **Choc à - 40°C sur tubes après 72h00 à 160°C** | **Tube 6*8** | **CASSE** | **CASSE** | **CASSE** | **NON CASSE** | **NON CASSE** |

### Abrégé

### Structure comprenant des polyamides semi-aromatiques souples à faible reprise en humidité

La présente invention concerne une structure comprenant au moins une couche constituée d'une composition (C) et d'autres couches constituées d'autres matériaux, la composition (C) comprenant, en poids, le total étant 100 :
- de 60 à 99,5% d'au moins un copolyamide de formule X/Y,Ar dans laquelle :
   · Y désigne les restes d'une diamine aliphatique ayant de 8 à 20 atomes de carbone,
   · Ar désigne les restes d'un diacide carboxylique aromatique,
   · X désigne soit les restes de l'acide aminoundecanoïque NH₂-(CH₂)₁₀-COOH, du lactame 12 ou de l'aminoacide correspondant soit le motif Y,x reste de la condensation de la diamine avec un diacide aliphatique (x) ayant entre 8 et 20 atomes de carbone soit encore le motif Y,I reste de la condensation de la diamine avec l'acide isophtalique,
- 0,5 à 40% d'au moins un produit choisi parmi les plastifiants, les nanocharges, les polyoléfines, les polyoléfines réticulées et des additifs.

## Revendications

1. Structure comprenant au moins une couche constituée d'une composition (C) et d'autres couches constituées d'autres matériaux, la structure comprennant :
- une couche externe constituée de la composition (C),
- éventuellement une couche de liant,
- une couche intérieure, éventuellement conductrice, constituée de polyamide aliphatique, de polyoléfine ou d'un mélange compatibilisé de polyamide aliphatique et de polyoléfine,
- éventuellement, une couche conductrice de polyamide aliphatique ou de mélange de polyamide aliphatique et de polyoléfine,
la composition (C) comprenant, en poids, le total étant 100 :
- de 60 à 99,5% d'au moins un copolyamide de formule X/Y,Ar dans laquelle :
. Y désigne les restes d'une diamine aliphatique ayant de 8 à 20 atomes de carbone,
. Ar désigne les restes d'un diacide carboxylique aromatique,
. X désigne soit les restes de l'acide aminoundecanoïque NH₂-(CH₂)₁₀-COOH, du lactame 12 ou de l'aminoacide correspondant soit le motif Y,x reste de la condensation de la diamine avec un diacide aliphatique (x) ayant entre 8 et 20 atomes de carbone soit encore le motif Y,I reste de la condensation de la diamine avec l'acide isophtalique,
- 0,5 à 40% d'au moins un produit choisi parmi les plastifiants, les nanocharges, les polyoléfines, les polyoléfines réticulées et des additifs
- ladite composition comprenant éventuellement un polyamide aliphatique.

2. Structure selon la revendication 1, **caractérisée en ce que** la quantité du polyamide aliphatique est comprise entre 5 et 40% pour respectivement 95 à 60% de copolyamide X/Y,Ar.

3. Structure selon la revendication 1 ou 2, **caractérisée en ce que** Ar désigne l'acide téréphtalique.

4. Structure selon l'une quelconque des revendications 1 à 3, **caractérisée en ce que** la diamine "Y" est une alpha-oméga diamine à chaîne droite de 9 à 14 atomes de carbone, de préférence la 1,10-décanediamine.

5. Structure selon l'une quelconque des revendications 1 à 4, **caractérisée en ce que** la composition (C) comprend de 70 à 93% en poids d'au moins un copolyamide X/Y.Ar.

6. Structure selon l'une quelconque des revendications 1 à 5, **caractérisée en ce que** la composition (C) comprend de 7 à 30% en poids d'au moins un produit choisi parmi les plastifiants, les nanocharges, les polyoléfines, les polyoléfines réticulées et des additifs.

7. Structure selon l'une quelconque des revendications 1 à 6, **caractérisée en ce qu'**il y a entre 0,5 et 0,7 mole de X pour 1 mole de Y (ou 1 mole de Ar).

8. Structure selon l'une quelconque des revendications 1 à 6, **caractérisée en ce que** X/Y,Ar désigne le copolyamide :
- 11/10,T qui résulte de la condensation de l'acide aminoundécanoïque, de la 1,10-décanediamine et de l'acide téréphtalique,
- 12/12,T qui résulte de la condensation du lactame 12, de la 1,12-dodécanediamine et de l'acide téréphtalique,
- 10,10/10,T qui résulte de la condensation de l'acide sébacique, de la 1,10-décanediamine et de l'acide téréphtalique ou
- 10,1/10,T qui résulte de la condensation de l'acide isophtalique, de la 1,10-décanediamine et de l'acide téréphtalique.

9. Structure selon l'une quelconque des revendications 1 à 8, **caractérisée en ce qu'**elle comprend :
- une couche externe constituée de la composition (C),
- éventuellement une couche de polyamide aliphatique ou d'un mélange de polyamide aliphatique et de polyoléfine,
- éventuellement une couche de liant,
- une couche centrale constituée d'un matériau barrière aux essences choisi parmi l'EVOH, les polymères fluorés, le PPS, le PBN, une polycétone aliphatique, le PA-MXD6, un LCP, les polymères nanocomposites et un alliage ayant pour matrice un des dits matériaux,
- éventuellement une couche de liant,
- une couche intérieure, éventuellement conductrice, constituée de polyamide aliphatique, de polyoléfine ou d'un mélange compatibilisé de polyamide aliphatique et de polyoléfine,
- éventuellement, une couche conductrice de polyamide aliphatique ou de mélange de polyamide aliphatique et de polyoléfine.

10. Dispositif de stockage ou de transfert de fluides comprenant une structure selon l'une quelconque des revendications 1 à 9.

## Patentansprüche

1. Struktur, die mindestens eine Schicht umfasst, welche aus einer Zusammensetzung (C) besteht, sowie weitere Schichten, die aus anderen Materialien bestehen, wobei die Struktur Folgendes umfasst:
- eine Außenschicht, die aus der Zusammensetzung (C) besteht,
- möglicherweise eine Bindemittelschicht,
- eine Innenschicht, die möglicherweise leitfähig ist, wobei sie aus aliphatischem Polyamid, aus Polyolefin oder aus einer verträglich gemachten Mischung von aliphatischem Polyamid mit Polyolefin besteht,
- möglicherweise eine leitfähige Schicht aus aliphatischem Polyamid oder aus einer Mischung von aliphatischem Polyamid mit Polyolefin,
wobei die Zusammensetzung (C) Folgendes umfasst, nach Gewicht, wobei der Gesamtwert gleich 100 ist:
- 60 bis 99,5 % mindestens eines Copolyamids der Formel X/Y,Ar, wobei:
. Y die Reste eines aliphatischen Diamins mit 8 bis 20 Kohlenstoffatomen bezeichnet,
. Ar die Reste einer aromatischen Dicarbonsäure bezeichnet,
. X entweder die Reste von Aminoundecansäure NH₂-(CH₂)₁₀-COOH, von Lactam 12 oder von der entsprechenden Aminosäure bezeichnet, oder den Baustein Y,x, nämlich einen Rest, welcher bei der Kondensationsreaktion zwischen dem Diamin und einer aliphatischen Disäure (x) mit 8 bis 20 Kohlenstoffatomen entsteht, oder aber den Baustein Y,I, nämlich einen Rest, welcher bei der Kondensationsreaktion des Diamins mit Isophthalsäure entsteht,
- 0,5 bis 40 % mindestens eines Produkts, das aus den Weichmachern, den Nanofüllstoffen, den Polyolefinen, den vernetzten Polyolefinen und den Additiven ausgewählt ist
- wobei die Zusammensetzung möglicherweise ein aliphatisches Polyamid umfasst.

2. Struktur nach Anspruch 1, **dadurch gekennzeichnet, dass** die Menge des aliphatischen Polyamids im Bereich von 5 bis 40 % liegt, wobei das Copolyamid X/Y,Ar in entsprechender Weise 95 bis 60 % ausmacht.

3. Struktur nach Anspruch 1 oder 2, **dadurch gekennzeichnet, dass** Ar Terephthalsäure bezeichnet.

4. Struktur nach einem beliebigen der Ansprüche 1 bis 3, **dadurch gekennzeichnet, dass** das Diamin "Y" ein geradkettiges alpha-omega-Diamin mit 9 bis 14 Kohlenstoffatomen ist, wobei es sich vorzugsweise um 1,10-Decandiamin handelt.

5. Struktur nach einem beliebigen der Ansprüche 1 bis 4, **dadurch gekennzeichnet, dass** die Zusammensetzung (C) 70 bis 93 Gewichts-% mindestens eines Copolyamids X/Y,Ar umfasst.

6. Struktur nach einem beliebigen der Ansprüche 1 bis 5, **dadurch gekennzeichnet, dass** die Zusammensetzung (C) 7 bis 30 Gewichts-% mindestens eines Produkts umfasst, das aus den Weichmachern, den Nanofüllstoffen, den Polyolefinen, den vernetzten Polyolefinen und den Additiven ausgewählt ist.

7. Struktur nach einem beliebigen der Ansprüche 1 bis 6, **dadurch gekennzeichnet, dass** pro 1 Mol an Y (oder 1 Mol an Ar) 0,5 bis 0,7 Mol an X vorliegen.

8. Struktur nach einem beliebigen der Ansprüche 1 bis 6, **dadurch gekennzeichnet, dass** X/Y,Ar ein Copolyamid folgender Art bezeichnet:
- 11/10,T, wie es bei der Kondensationsreaktion zwischen Aminoundecansäure, 1,10-Decandiamin und Terephthalsäure entsteht,
- 12/12,T, wie es bei der Kondensationsreaktion zwischen Lactam 12, 1,12-Dodecandiamin und Terephthalsäure entsteht,
- 10,10/10,T, wie es bei der Kondensationsreaktion zwischen Sebacinsäure, 1,10-Decandiamin und Terephthalsäure entsteht, oder
- 10,I/10,T, wie es bei der Kondensationsreaktion zwischen Isophthalsäure, 1,10-Decandiamin und Terephthalsäure entsteht.

9. Struktur nach einem beliebigen der Ansprüche 1 bis 8, **dadurch gekennzeichnet, dass** sie Folgendes umfasst:
- eine Außenschicht, die aus der Zusammensetzung (C) besteht,
- möglicherweise eine Schicht aus aliphatischem Polyamid oder aus einer Mischung von aliphatischem Polyamid mit Polyolefin,
- möglicherweise eine Bindemittelschicht,
- eine Mittelschicht, die aus einem Material mit Sperrwirkung besteht, dessen Bestandteile aus EVOH, Fluorpolymeren, PPS, PBN, einem aliphatischen Polyketon, PA-MXD6, LCP, Nanokompositpolymeren und einer physikalischen Polymermischung, bei welcher eines dieser Materialien die Matrix bildet, ausgewählt sind,
- möglicherweise eine Bindemittelschicht,
- eine Innenschicht, die möglicherweise leitfähig ist, wobei sie aus aliphatischem Polyamid, aus Polyolefin oder aus einer verträglich gemachten Mischung von aliphatischem Polyamid mit Polyolefin besteht,
- möglicherweise eine leitfähige Schicht aus aliphatischem Polyamid oder aus einer Mischung von aliphatischem Polyamid mit Polyolefin.

10. Vorrichtung zum Lagern oder Befördern von Fluiden, die eine Struktur nach einem beliebigen der Ansprüche 1 bis 9 umfasst.

## Claims

1. Structure comprising at least one layer consisting of a composition (C) and other layers consisting of other materials, the structure comprising:
- an external layer consisting of the composition (C),
- optionally a tie layer,
- an internal layer, which is optionally conducting, consisting of aliphatic polyamide, of polyolefin or of a compatibilized mixture of aliphatic polyamide and of polyolefin,
- optionally a conducting layer of aliphatic polyamide or a mixture of aliphatic polyamide and of polyolefin,
the composition (C) comprising, by weight, the total being 100%:
- from 60 to 99.5% of at least one copolyamide of formula X/Y,Ar, in which:
• Y denotes the residues of an aliphatic diamine having from 8 to 20 carbon atoms,
• Ar denotes the residues of an aromatic dicarboxylic acid,
• X denotes either the residues of aminoundecanoic acid NH₂-(CH₂)₁₀-COOH, of lactam 12 or the corresponding amino acid, or X denotes the unit Y, x, the residue of the condensation of the diamine with an aliphatic diacid (x) having between 8 and 20 carbon atoms, or X also denotes the unit Y,I, the residue of the condensation of the diamine with isophthalic acid,
- from 0.5 to 40% of at least one product chosen from plasticizers, nanofillers, polyolefins, crosslinked polyolefins and additives,
- the said composition optionally comprising an aliphatic polyamide.

2. Structure according to Claim 1, **characterized in that** the amount of the aliphatic polyamide is between 5 and 40% for respectively from 95 to 60% of copolyamide X/Y,Ar.

3. Structure according to Claim 1 or 2, **characterized in that** Ar denotes terephthalic acid.

4. Structure according to any one of Claims 1 to 3, **characterized in that** the diamine "Y" is an α,ω-diamine comprising a straight chain of 9 to 14 carbon atoms, preferably 1,10-decanediamine.

5. Structure according to any one of Claims 1 to 4, **characterized in that** the composition (C) comprises from 70 to 93% by weight of at least one copolyamide X/Y,Ar.

6. Structure according to any one of Claims 1 to 5, **characterized in that** the composition (C) comprises from 7 to 30% by weight of at least one product chosen from plasticizers, nanofillers, polyolefins, crosslinked polyolefins and additives.

7. Structure according to any one of Claims 1 to 6, **characterized in that** there is between 0.5 and 0.7 mol of X per 1 mol of Y (or 1 mol of Ar).

8. Structure according to any one of Claims 1 to 6, **characterized in that** X/Y,Ar denotes the copolyamide:
- 11/10,T, which results from the condensation of aminoundecanoic acid, 1,10-decanediamine and terephthalic acid,
- 12/12,T, which results from the condensation of lactam 12, 1,12-dodecanediamine and terephthalic acid,
- 10,10/10,T, which results from the condensation of sebacic acid, 1,10-decanediamine and terephthalic acid, or
- 10,I/10,T, which results from the condensation of isophthalic acid, 1,10-decanediamine and terephthalic acid.

9. Structure according to any one of Claims 1 to 8, **characterized in that** it comprises:
- an external layer consisting of the composition (C) ,
- optionally a layer of aliphatic polyamide or of a mixture of aliphatic polyamide and of polyolefin,
- optionally a tie layer,
- a central layer consisting of a barrier material to petrol chosen from EVOH, fluoropolymers, PPS, PBN, an aliphatic polyketone, PA-MXD6, an LCP, nanocomposite polymers and an alloy having one of the said materials as matrix,
- optionally a tie layer,
- an internal layer, optionally conducting, consisting of aliphatic polyamide, or polyolefin or of a compatibilized mixture of aliphatic polyamide and of polyolefin,
- optionally a conducting layer of aliphatic polyamide or of mixture of aliphatic polyamide and of polyolefin.

10. Device for the storage or transfer of fluids comprising a structure according to any one of Claims 1 to 9.
